# EUROPEAN PATENT APPLICATION

(11) **EP 4 579 514 A1**
(43) Date of publication of application: **02.07.2025**
(21) Application number: 24216118.0
(22) Date of filing: 28.11.2024
(51) Int. Cl.: G06F 30/398, G03F 1/36, G06F 30/394, G06F 119/18, G06F 119/22

(54) **SEMICONDUCTOR TEST STRUCTURE GENERATION BASED ON LITHOGRAPHIC SIMULATION**

(30) Priority: 29.12.2023 US 202318400719
(71) Applicant: INTEL Corporation, Santa Clara, CA 95054 (US)
(72) Inventor: MILLER, Brian Hendrik, Hillsboro, OR 97124 (US); STAHLKE, Daniel L., Hillsboro, OR 97124 (US); MCKENZIE, Jonah, Portland, OR 97232 (US); HE, Chunyong, Portland, OR 97229 (US); VAITHEESWARAN, Pavan Kumar, Hillsboro, OR 97006 (US); BASHIR, Muhammad Muqarrab, Portland, OR 97229 (US); BAIDYA, Bikram, Portland, OR 97229 (US); GU, Allan, Portland, OR 97229 (US)
(74) Representative: HGF

(57) **Abstract**

A method comprising accessing, by at least one computing system, a plurality of layout blocks comprising a plurality of design patterns for an interconnect layer and identifications of lithography risk sites of the plurality of design patterns, the lithography risk sites corresponding to violations of constraint based checks for simulated physical patterns corresponding to the plurality of design patterns; and generating, by the at least one computing system, a layout comprising the plurality of layout blocks and at least one routing path that is coupled to a subset of the plurality of design patterns having lithography risk sites.

## Description

### TECHNICAL FIELD

This disclosure relates in general to the field of computing systems and, more particularly, to semiconductor test structure generation based on lithographic simulation.

### BACKGROUND

Cutting-edge semiconductor manufacturing processes are terribly complex. Housed in billion-dollar factories and comprising hundreds of processing steps to yield a finished device, they are capable of reliably printing features as small as 3 nm hundreds of billions of times across wafers that extend a foot in diameter. Developing a new semiconductor manufacturing process requires defining a set of complex design rules that establish constraints that a semiconductor device must follow to ensure manufacturability and rooting out designs that result in yield reduction. Even when design rules are followed, manufactured structures may still present defects resulting in undesired open or short circuits.

### BRIEF DESCRIPTION OF THE DRAWINGS

FIGS. 1A-1B illustrate an example transistor in accordance with certain embodiments.
FIGS. 2A-2F illustrate an exemplary photolithography process in accordance with certain embodiments.
FIGS. 3A-3B illustrate differences between features printed on a mask and those processed on a wafer due to process distortion effects in accordance with certain embodiments.
FIG. 4 illustrates an example clip of a test layout in accordance with certain embodiments.
FIG. 5 illustrates an example user interface for a layout generator in accordance with certain embodiments.
FIG. 6 illustrates an example output of a lithography simulation in accordance with certain embodiments.
FIG. 7 illustrates a portion of an example test layout comprising columns of clips with lithography risk sites in accordance with certain embodiments.
FIG. 8 illustrates an example clip of the layout of FIG. 7 in accordance with certain embodiments.
FIG. 9 illustrates a portion of another example test layout comprising columns of clips with lithography risk sites in accordance with certain embodiments.
FIG. 10 illustrates a flow for semiconductor test structure generation based on lithographic simulation in accordance with certain embodiments.
FIG. 11 provides a schematic illustration of a cross-sectional view of an example integrated circuit device, in accordance with any of the embodiments disclosed herein.
FIG. 12 illustrates a computing system in accordance with certain embodiments.
FIGS. 13A and 13B illustrate design patterns and simulated physical patterns in accordance with certain embodiments.

Like reference numbers and designations in the various drawings indicate like elements.

### DESCRIPTION OF EXAMPLE EMBODIMENTS

Semiconductor manufacturing has become increasingly complex over the years. Since the turn of the century, the minimum feature size has shrunk by over an order of magnitude as the industry has progressed from the 130 nanometer (nm) to 3 nm technology nodes. In semiconductor manufacturing, a technology node (also referred to as a process node) may refer to a specific semiconductor manufacturing process. A technology node historically referred to a semiconductor feature size (e.g., channel length) measured in nanometers (nm), though recently some technology node names have become decoupled from specific feature sizes and instead generally refer to relative size, performance, and/or power consumption of integrated circuits built using the technology node.

Over the years, processor complexity has dramatically increased. Current flagship products have transistor counts that well exceed 10 billion. To handle these reduced feature sizes and increased chip complexities, companies must invest billions of dollars and years of research to build state-of-the-art fabrication facilities. Research and development costs are driven ever-upward by the rising cost of increasingly sophisticated equipment needed for advanced processes. The industry has taken steps to decrease per-transistor manufacturing costs (for example, by moving to larger wafers), but the overall trend has been for each process generation to cost more than the last. With up to hundreds of individual dies on wafers that span a foot in diameter, the total number of transistors that can be printed on a wafer is on the order of one trillion. Developing high-volume manufacturing processes that can reliably manufacture transistors and supporting interconnect at such an extreme scale presents considerable challenges.

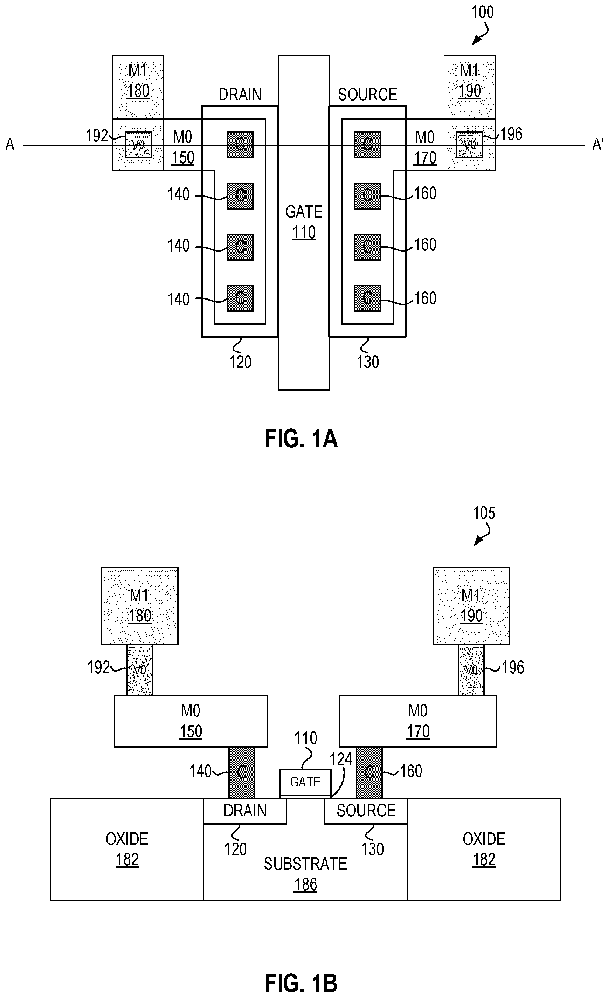

FIG. 1A illustrates the physical design of an exemplary planar transistor. Transistor 100 is a field-effect-transistor (FET), the transistor type that comprises the bulk of transistors used in modern semiconductor devices. Transistor 100 comprises gate 110, drain 120, and source 130 regions. The gate region in a FET can be thought of as an "on-off" switch that controls the flow of current between drain and source regions. When gate 110 is "off", there is no (or little) current flowing through a channel region that connects drain 120 to source 130 and when gate 110 is "on", current readily flows through the channel region. Transistor 100 is connected to other transistors by a set of interconnect layers stacked vertically on top of transistor 100. Contacts 140 connect drain 120 to segment 150 of a first metal layer (M0), and contacts 160 connect source 130 to M0 segment 170. M0 segments 150 and 170 are in turn connected to a second metal layer (M1) segments 180 and 190 by a first layer of "vias" (V0) 192 and 196, respectively. In general, metal layer thickness increases as one moves up the interconnect stack, with thinner lower-level metals being generally used for the local routing of signals and thicker upper-level metals being used for global signal routing and power/ground planes. For simplicity, FIG. 1A shows only two levels of metal. Current semiconductor manufacturing processing may have up to ten layers of metal interconnects.

FIG. 1B illustrates an exemplary cross-section of the planar transistor of FIG. 1A taken along the line A-A'. Cross-section 105 shows gate 110 separated from drain 120 and source 130 regions by high-k dielectric layer 124, which electrically insulates gate 110 from drain 120 and source 130. Transistor 100 is in substrate region 186 and is insulated from adjacent transistors by oxide regions 182. The planar transistor illustrated in FIGS. 1A and 1B is just one type of transistor topography, the planar nature of the transistor reflecting that the gate, source, and drain regions are located on or are adjacent to a relatively planar surface. Another type of transistor topography is the non-planar transistor topography used in FinFETS, which are used extensively in cutting-edge manufacturing processes. FinFETS are field-effect transistors that operate under the same general principle as planar FET transistors - a gate controls the flow of current between drain and source region - with the variation that the gate wraps around a set of fins that extend vertically upwards from the wafer surface. Technology nodes may integrate these and/or any other suitable types of transistors.

Essential to semiconductor manufacturing is the process of photolithography, by which patterns are transferred from a mask onto a wafer. In photolithography, masks are used to define the shape and location of various features to be patterned on a wafer for a given process layer. For example, one mask defines where oxide regions are located, another mask defines where high-k dielectrics will be located, another mask defines locations of source and drain regions, and yet another mask defines where contacts will be placed. Additional masks may be used to define each metal layer and intervening via layers.

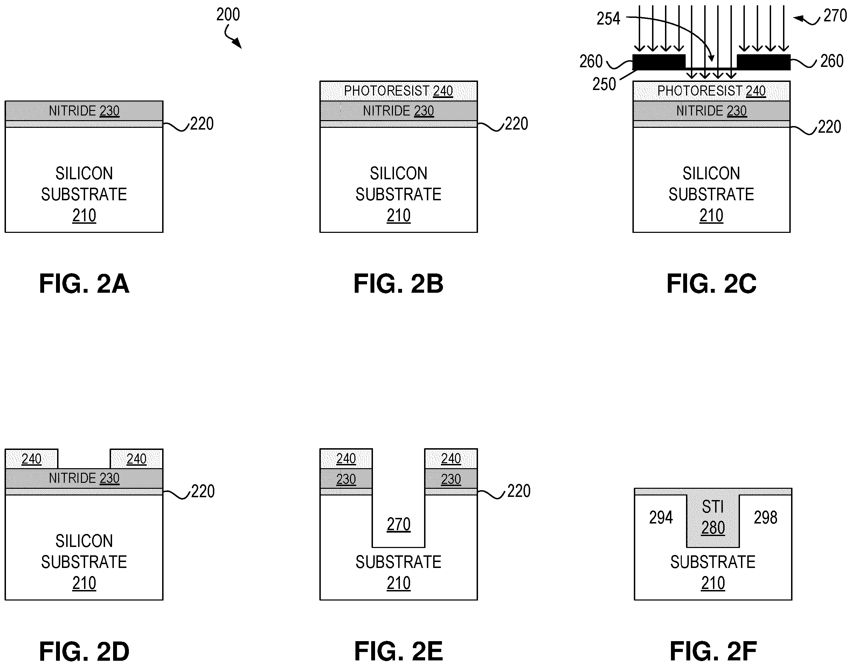

FIGS. 2A-2F illustrate an exemplary photolithography process. Process 200 illustrates how the oxide regions 182 in FIG. 1B can be defined using photolithography. In FIG. 2A, a thin silicon dioxide layer 220 is thermally grown across the top of silicon substrate 210 of a wafer. Silicon nitride layer 230, a protective layer, is deposited on top of silicon dioxide layer 220. In FIG. 2B, photoresist 240 is deposited on top of nitride layer 230. A photoresist is a material whose reactance to an etchant or solvent increases (if a positive photoresist) or decreases (negative photoresist) upon exposure to light. In process 200, photoresist 240 is a positive photoresist. In FIG. 2C, mask 250 with patterns 260 is positioned over the wafer and exposed to light. The light passes through transparent region 254 of mask 250 and exposes photoresist 240. Patterned regions 260 are opaque to the light and the photoresist regions under patterns 260 are not exposed. In FIG. 2D, photoresist 240 is chemically developed and the exposed regions are dissolved. The remaining portions of photoresist 240 can now act as an on-wafer mask to allow for selective processing of the wafer. In FIG. 2E, the wafer is subjected to an etch step that removes a portion of the silicon nitride layer 230, silicon dioxide layer 220, and substrate 210 to create trench 270. In FIG. 2F, the photoresist and nitride layers are removed, and trench 270 is filled with silicon dioxide to create shallow trench isolation (STI) region 280 that serve to keep transistors formed in regions 294 and 298 electrically isolated from each other. In a similar manner, photolithography may be used form the various interconnect layers.

As masks are the means by which features are realized in semiconductor devices, any semiconductor device design must ultimately be reduced to a physical design, the level of design abstraction from which masks are to be generated. The physical design of a transistor, circuit, or processor to be manufactured is often referred to as a "layout." Electronic design automation (EDA) tools allow processor architects and circuit designers to design at levels of abstraction above the physical design level. Architects typically define their designs using a hardware design language (HDL), such as VHDL or Verilog. Once they have verified that their designs perform as desired, a physical design can be generated automatically using a library of standard layout cells. Circuit designers often seek performance or functionality not available using standard cells and often enter their designs into a schematic capture tool. Once their custom designs are finalized, the circuit schematics are handed off to layout designers who manually craft the custom physical designs.

Regardless of whether a physical design is generated automatically or manually it must conform to a set of layout design rules established for a manufacturing process. Design rules are constraints that a physical design must follow to ensure manufacturability. Most design rules express a minimum width or space for a feature of an integrated circuit, such as, "gate length ≥10 nm," "source/drain diffusion enclosure of a contact ≥ 16 nm," and "space between metal-1 traces ≥ 20 nm." Design rules represent a trade-off between feature density and manufacturability. Being able to print smaller feature sizes can mean more die can be packed onto a wafer but if the process cannot reliably print the smaller features, the resulting reduction in wafer yield can more than offset cost reduction gained by being able to print more die on a wafer.

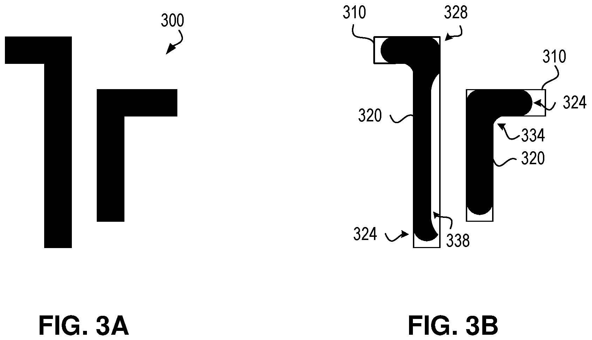

FIGS. 3A-3B illustrate differences between features printed on a mask and those processed on a wafer due to process distortion effects. FIG. 3A illustrates two gate polygons 300 in a physical design. FIG. 3B illustrates a simplified view of how polygons 300 may appear as processed on a wafer. Outlines 310 represent the boundaries of polygons 300 and shapes 320 represent the corresponding as-processed features. In this example, ends 324 and exterior corners 328 of shapes 320 are rounded off, interior corners 334 are filled in, and segment 338 narrowed due to a nearby feature. Even when advanced techniques (e.g., optical proximity correction (OPC)) are used to modify the base design so that the manufactured features are closer to the features in the base design, the manufactured features may have differences from the ideal designed features. Accordingly, even when a designed feature or set of features conform with a set of design rules, the manufactured features may still have issues (e.g., that result in open or short risks) that may affect yield.

Various embodiments of the present disclosure provide methods and systems to speculatively generate short loop test structures aimed at potential semiconductor manufacturing risks. An algorithm may be used to generate test layout clips, the test layout clips may undergo a lithography simulation to identify lithography risk sites, and then a test chip is designed with routing structures to test the identified risk sites.

Test layout clips may be systematically generated to resemble a real product, e.g., by mimicking structures generated by autorouting tools. A subset of the generated layouts is then selected, e.g., by sorting the layouts based on manufacturability risk and layout realism. Manufacturability risk may be calculated via lithography simulation, with risk sites binned by type to isolate failure modes for efficient electrical test. Layout realism may be scored by a machine learning model trained on design layout from previous products. By generating a massive number of layout clips and applying discriminators to select a subset of clips, confidence is increased that the short loop test structures provide a good indication of process health on product-like layout structures. Incorporation of lithography simulation into the test chip generation pipeline enables large scale generation of potentially risky test structures.

Once test structures are selected and target risk sites identified, a placement algorithm is then used to pack the generated layout clips as densely as possible without violating process design rules. In connection with the placement, a routing algorithm connects the target risk sites for open and/or short failure modes, ensuring compliance with all design rules and electrical test requirements. In some embodiments, an optimization algorithm may be used to isolate the failure modes to achieve high confidence that any fault detected in electrical test can be attributed to the target failure mode.

Various embodiments may improve the pace of development of semiconductor manufacturing processes. For example, by simulating many systematically generated test layout clips and binning by risk type, test designs may be focused on individual failure modes, enabling rapid diagnosis through electrical test. Systems disclosed herein may target core manufacturability problems and may scale well to provide adequate design space coverage.

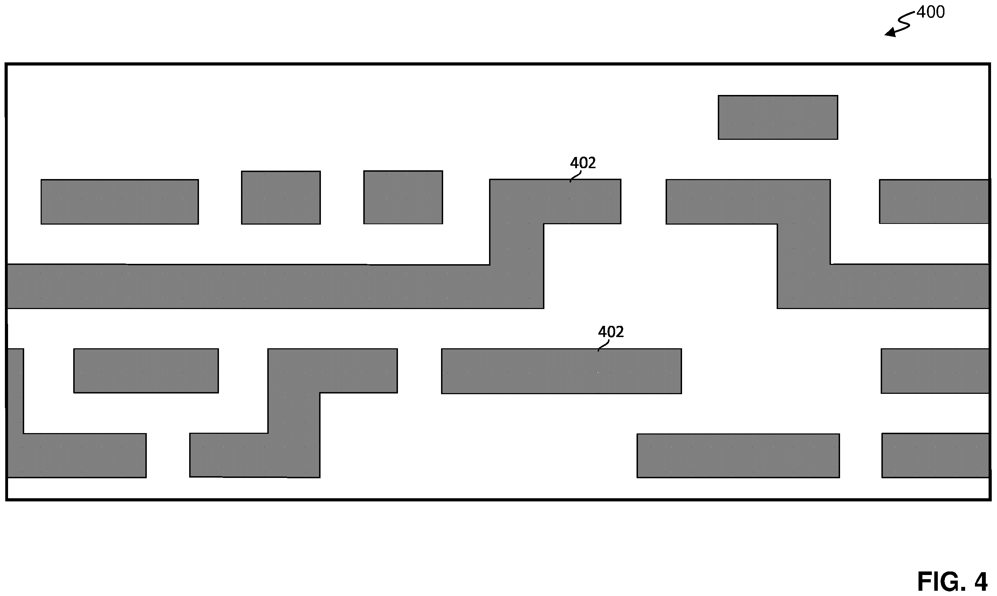

FIG. 4 illustrates an example clip 400 of a test layout, which also may be referred to as a drawn layout or design layout. The clip 400 represents various features (e.g., design patterns 402). The clip may include patterns for a particular interconnect layer, such as a metal layer (e.g., M0, M1, M2, etc.). As an example, the patterns may represent metal segments and the area not occupied by the patterns may represent, e.g., one or more dielectric materials (e.g., oxides) to be manufactured in a test structure.

In some embodiments, all or a portion of the clips of a test layout may be designed by one or more humans. For example, the clips may include custom physical designs generated by layout designers. In various embodiments, the clips may additionally or alternatively include patterns generated by an EDA (e.g., based on HDL provided by one or more designers).

In various embodiments, at least some of the clips are synthetically generated by a computing system executing a layout generator. The layout generator produces a plethora of clips (where a clip may contain various layout features) that are design rule clean (that is, all of the layout patterns are compliant with a set of design rules for the particular layer of a particular technology node). As an example, the layout generator may produce thousands, tens of thousands, or even over a hundred thousand clips (e.g., similar in size to the one depicted or having any other suitable size) for a particular layer.

In various embodiments, the layout generator may produce a highly diverse set of randomized design patterns 402 that are designed to be realistic and thus provide valuable insight into a manufacturing process when the design patterns 402 are manufactured and tested. The aim of the layout generator may be to generate layout clips in which designs will pass a design rule checker but are still risky to manufacture. To achieve this, the layout generator may perform a biased random selection of where to place segments of features based on layout diversity (as a highly diverse set of layouts is desired) and maintaining dimensions and spacing close to design rule thresholds (as this results in riskier manufacturing).

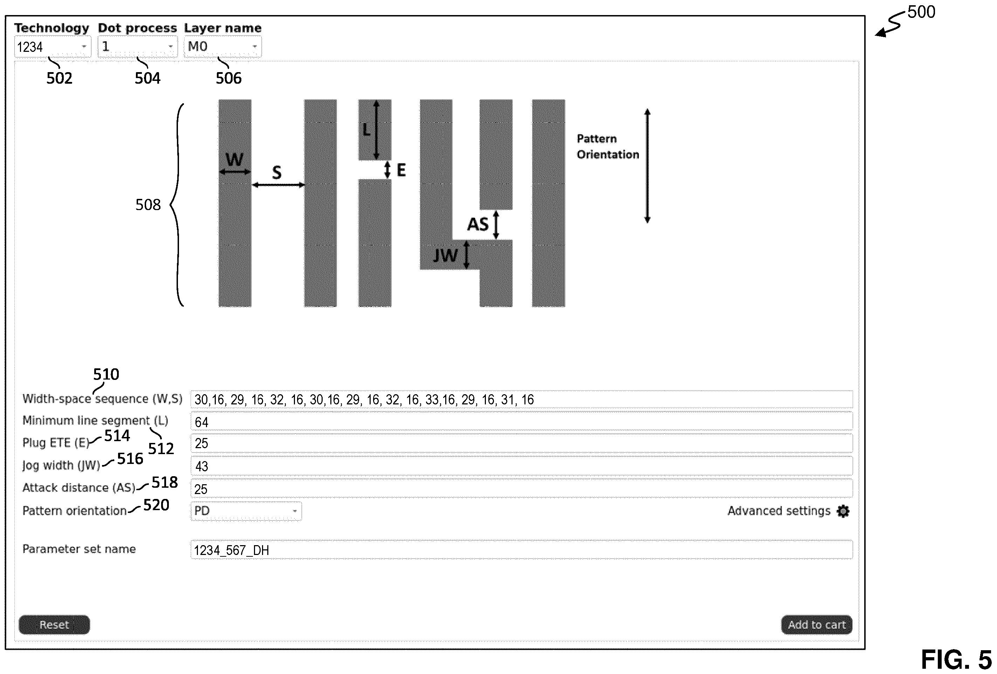

FIG. 5 illustrates an example user interface 500 for a layout generator. The user interface 500 may accept various parameters from a user and generate randomized layout patterns based on the parameters. In the embodiment depicted, such parameters include technology node 502, dot process 504 (e.g., revision number for the technology node), and the layer 506 for which the layout clips are to be generated. The design rules that are used to bias the generated layout may be retrieved based on the specification of the technology node 502 and dot process 504.

The interface includes a user guide 508 that illustrates at least some of the dimension parameters that may be input via the interface 500. In the embodiment depicted, such parameters include a width-space sequence 510, a minimum line segment 512, a plug ETE 514, a jog width 516, an attack distance 518, and a pattern orientation 520. The layouts generated may be based on any suitable combination of such dimension parameters.

The width-space sequence 510 may define a sequence of widths of lines and spacing between lines (e.g., as the clip progresses from left to right). The minimum line segment 512 may define a minimum length of any lines in the clip. The plug ETE 514 and attack distance 518 may specify the minimum distance between line segments (where the attack distance refers to an instance where a jog is connected at the end of one or both of the wires). The jog width 516 may specify the width of a jog that connects between two line segments. The pattern orientation 520 defines the orientation of the lines (e.g., portrait or landscape).

The layout generator may generate one or more clips in conformance with the design rules corresponding to the process design kit (PDK) specified by the technology node 502 and dot process 504 and the dimension input parameters. For example, the pattern generator may generate several such different clips that are all in conformance with the parameters.

For example, the pattern generator may start with a series of straight and parallel lines (e.g., that are in conformance with the width-space sequence) and then perform randomized insertions of cuts and jogs to the lines (with these randomized modifications being in conformance with the dimension parameters specified). The cuts may remove material of a line to make two lines and the jogs may add material to connect two lines. These randomized modifications may be biased towards geometries that are equal to or close to design rule thresholds (e.g., minimum size geometries, close spacing, etc.). For example, if a corner to corner design rule specifies 20 nm, then the pattern generator attempts to make corner to corner relationships at or near 20 nm.

In some instances, a candidate clip may be generated by selecting two or more points within the clip to be connected and by generating synthetic obstacles within the clip. The points may be selected randomly or may be specified by a user. A router then produces a route between the points that avoids the obstacles and is design rule clean (e.g., does not violate any of the applicable design rules). Empty space within the clip may then be filled by performing randomized insertions of cuts and jogs to other lines in the clip (e.g., that span from one side of the clip to the other side in a parallel fashion). In various embodiments, the layout generator may produce multiple clips from the same selected points and/or obstacles. Such embodiments may bias the design of the clips towards a layout that could appear on a real product.

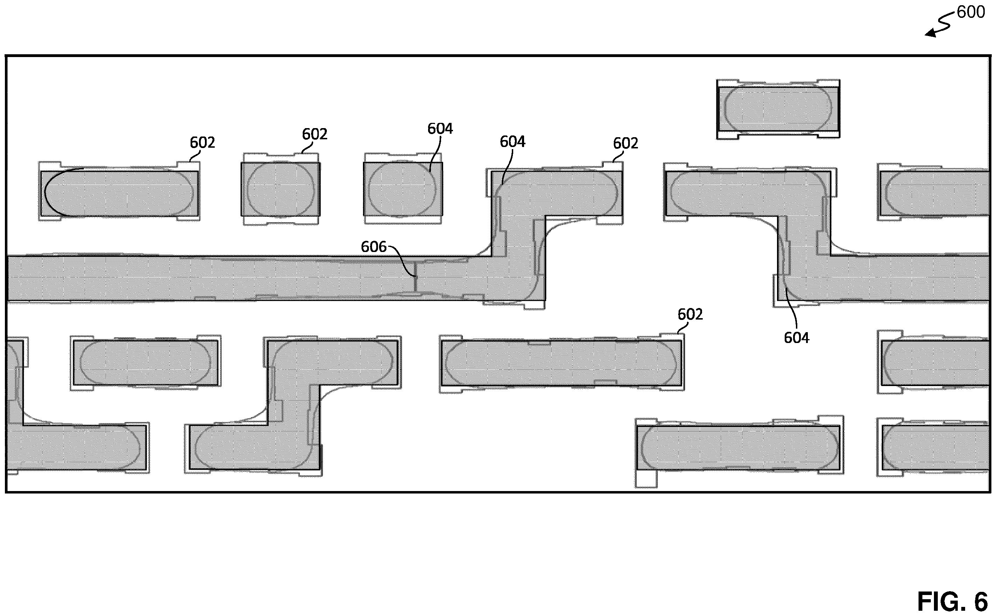

After a variety of design rule clean clips are available, the clips may be simulated by a lithography simulation tool. The lithography simulation tool receives one or more clips as input and performs a lithography simulation on the clips. FIG. 6 illustrates an example output 600 of a lithography simulation. This output 600 corresponds to the portion of the clip 400.

The lithography simulation tool may be an inverse lithography simulator (ILS) that starts with a target layout (e.g., as defined by a test layout clip) and works backward to generate a corresponding mask that is configured to produce physical structures that are as close as possible to the patterns in the design. The ILS may use mathematical algorithms and/or simulations to iteratively adjust the geometries on the mask until the desired configuration is achieved. For example, the ILS may utilize OPC in some embodiments.

In the output 600, the designed patterns are shown in grey for illustrative purposes (these patterns are not necessarily output by the lithography simulation tool as they are the input to the tool). The mask patterns 602 of the mask simulated based on designed patterns are also shown (although output of such patterns by the tool may be optional). In the embodiment depicted, these mask patterns 602 are generally rectilinear, but are more complex (e.g., include more lines) than the design patterns 402. The output 600 also includes the simulated physical patterns 604 that are expected to be manufactured based on a selected technology node (e.g., that may be used to manufacture the design patterns 402). The simulated physical patterns 604 may be generally curvilinear (especially relative to the design patterns 402 and mask patterns 602). In various embodiments, the design patterns 402 and/or the simulated physical patterns 604 may be represented by a series of polygon structures. The lithography simulation tool may use any suitable information to generate the mask patterns 602 and expected manufactured patterns 604, such as modeling information obtained from previous manufacturing and testing in the technology node or other technology nodes.

After a clip has been processed by the lithography simulation tool, a constraint based checker may examine the simulated physical patterns 604 of the clip to determine whether any constraint based check (CBC) violations are present. Information about the violations (e.g., locations of violations, types of violations, severity of violations) may be stored for further analysis. The location within a clip of simulated physical patterns 604 that results in a CBC violation may be termed a lithography risk site.

A CBC violation indicates a risk of an undesired open circuit or short circuit occurring in a manufactured chip. Examples of CBC violations that may be present within the various clips include toploss, pinch, neck, scum, bridge, negative deviation, positive deviation, minimum coverage area violations, pullback, and pushout violations.

A toploss violation may refer to resist toploss which results in shorting of metal lines assuming a dark field process with positive tone resist. A pinch violation may occur when a pattern 604 is unduly narrow unduly (e.g., due to other patterns coming close to the pinch location). A neck violation may be similar to a pinch violation but may be due to a planar jog proximate the violation location. A scum violation may refer to a situation in which a trench used to create a metal line is not fully cleared of the resist material either at the bottom or at the top resulting in an open risk (e.g., a metal line breaking and no current flowing). A bridge violation may occur when two discrete patterns 604 have edges that could overlap, thus merging the two separate geometries and causing a short. Negative and positive deviation violations (where deviation refers to deviation from the mask layout) may occur when either too much material for the patterns is produced (resulting in potential short risks) or too little material is produced (resulting in potential open risks). A minimum coverage area violation may result when a top portion of a via is not covered with sufficient metal. A pullback violation may occur when a drawn geometry is likely to pull back into the wire shape and a pushout violation may occur when a drawn geometry is likely to extend beyond the wire shape.

As an example, in the output 600, a lithography risk site 606 has been identified. This particular risk is a neck risk due to an excessive narrowing of the line in the physical pattern close to a jog.

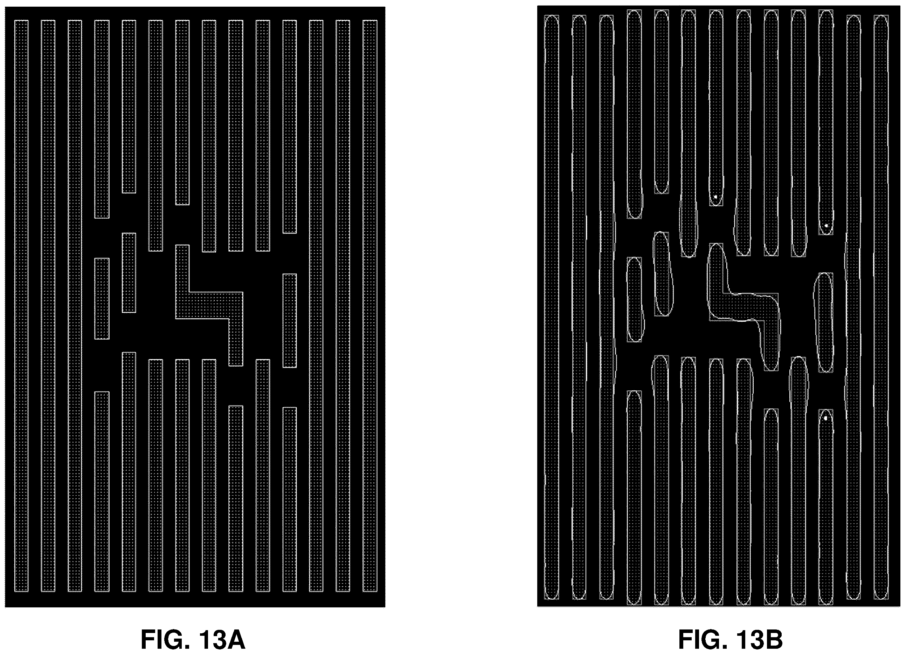

As another example, FIG. 13A illustrates example design patterns and FIG. 13B illustrates corresponding simulated physical patterns. FIG. 13B also illustrates three lithography risk sites marked as white dots that correspond to pinch violations.

After the lithography risk sites 606 have been identified for a plurality of clips, a route generator may sort the clips (e.g., using a cost function) based on the violation density and/or severity of violations of the lithography risk sites in the clips. In an embodiment, each lithography risk site of the clips may be assigned a severity value (e.g., between 0 and 1). The risk score for each clip may then be the sum of the severity values and the clips may be sorted based on their risk scores.

In some embodiments, the sorting may additionally or alternatively be based on the realism of the clips (e.g., based on similarities between the generated clips and layouts of actual manufactured products and/or other layouts identified as being realistic). The route generator may then generate a test layout and one or more test routing paths through lithography risk sites of the test layout.

The route generator may accept various inputs, such as one or more of an ordered list of preferred clips (e.g., based on the sorting), information about the lithography risk sites (e.g., locations, types, severity, etc.), design rule information for the particular technology node, boundary pin information (e.g., indicating how many routing chains are to be present), and layout information (e.g., dimensions of the layout, patterns that aren't part of the clips that are to be included on the test chip, etc.).

The route generator may output a layout of clips (with design patterns 402) that is design rule clean and that includes one or more test routing paths through various lithography risk cites in order to allow testing of opens and/or shorts (e.g., depending on whether a comb structure and/or chain structure is being generated) on a manufactured test chip. The route generator may be biased towards selecting the clips that are highest in the sorting order. In some embodiments, a large percentage (e.g., >90% or >99%) of the highest scored clips may be selected for the layout. The route generator may attempt to use as many clips having higher risk lithography risk sites as possible in a densely packed layout that does not violate design rules.

The layout may include a stressed layer (where the patterns of the selected clips are present), a routing layer (where test routing is present), and a via layer to connect locations of the stressed layer to the routing layer. In some instances, the route generator may also generate a visualization of the test routing (e.g., that merges the paths of the test routing on the stressed layer and the routing layer in order to facilitate debugging).

Although any suitable methods for determining the layout and the test routing paths may be used, in some embodiments, a satisfiability (SAT) solver based routing algorithm may be executed. In one example, this may include executing a general purpose engine that can support arbitrary complexity at each clause. The algorithm may utilize a hard constraint on proper connectivity and an assumption that X% of the lithography risk sites can be connected together. The algorithm may then perform a binary search among possibilities to attempt to maximize the lithography risk sites that are connected by one or more test routing paths. In some instances, the routing algorithm may utilize a score value of each lithography risk site along with a radius of engagement to analyze the risk sites and generate the layout and/or test routing paths.

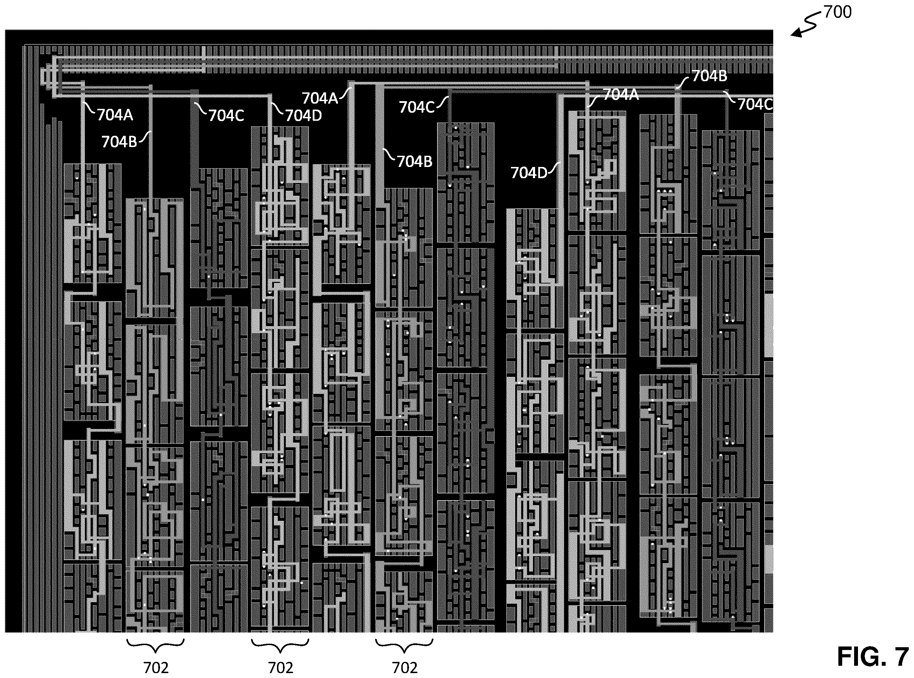

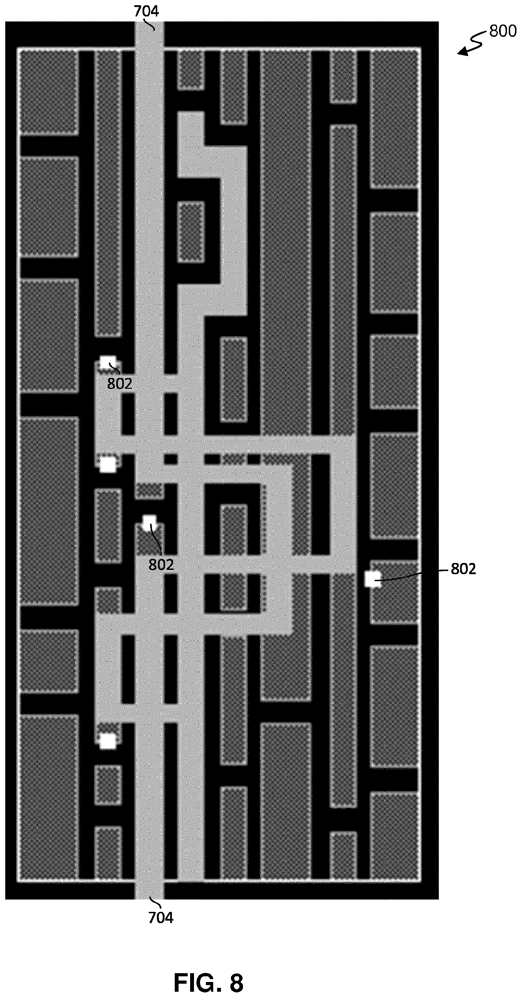

FIG. 7 illustrates a portion of an example test layout 700 comprising columns of clips with lithography risk sites and FIG. 8 illustrates an example clip 800 of the layout 700. In the depiction of the layout 700, the lithography risk sites are depicted as small white dots. These locations are more visible in FIG. 8 (as lithography risk sites 802).

As depicted, a selection of clips are arranged in columns 702 in the test layout 700. In some instances, the clips in the test layout may be separated from each other by small buffer spaces that do not include any test patterns (these buffers may vary in size across the layout). In the test layout 700, the patterns of the clips are placed on a single layer (e.g., an interconnect layer such as M0, M1, M2, etc.) referred to as a stressed layer. A second layer (referred to as a routing layer) may include segments of test routing paths that interconnect patterns having lithography risk sites together.

The layout 700 includes various test routing paths 704 that pass through columns 702 of clips. The test routing paths 704 may connect to test patterns with lithography risk sites 802. In various instances, the test routing paths 704 may not be able to connect to all test patterns with lithography risk sites 802 (e.g., a routing path that is too long may fail testing due to excessive resistance through the route and/or some lithography risk sites 802 may be on small wires that can't be reached pragmatically or without affecting the characteristics of the wires), so the route generator may determine test routing paths 702 in a manner that optimizes the number and/or types of lithography risk sites 802 that are connected, subject to a constraint on a maximum route length.

In various embodiments, the route generator may generate test routing paths 704 that connect to at least one pattern in each of the clips. In some embodiments, the test routing paths 704 may be generated in parallel (e.g., simultaneously) to produce an effective routing answer.

In the test layout shown in FIG. 7, a chain routing structure is used for the routing paths 704. Chain routing is used to detect open circuit risks through a long, relatively scenic path through a set of test patterns.

The test routing paths 704 may be present on two different (e.g., adjacent) layers. For example, in the layout 700 shown, within a clip, a test routing path may travel in a vertical direction (that is from the top of FIG. 7 to the bottom of FIG. 7 or vice versa which may correspond to a first lateral direction on an actual test chip) through a design pattern (that is, the design pattern may be a segment of a test routing path) that is located in a first layer (the stressed layer). The test routing path may then travel in an orthogonal direction (e.g., a horizontal direction from left to right in FIG. 7 or vice versa which may correspond to a second lateral direction on an actual test chip) on a second layer (the routing layer). When moving in the horizontal direction through the footprint of a clip, the test routing path may include a via from the stressed layer to the routing layer, a segment in the horizontal direction in the routing layer, and then another via back to a different pattern in the stressed layer from the routing layer).

In some embodiments, the test routing paths are not limited to a single direction orientation within a layer, as a test routing path could include lateral jogs in the stressed layer, although the majority of the test routing paths in the stressed layer is in a single direction orientation (e.g., vertical in the embodiment shown). In some embodiments, the routing layer only has lines oriented in one direction (e.g., orthogonal to the direction that the test routing paths generally take in the stressed layer), although in other embodiments, the routing layer could have lines oriented in any suitable direction(s).

A test routing path may also be present on the stress layer within buffer zones between clips (in either a vertical or horizontal orientation). This would include the addition of interconnect in the buffer zones (whereas other portions of the test routing path simply leverage the design patterns in the clips).

In various instances, a routing path may connect through any suitable number of columns. For example, it is evident in FIG. 7 that various routing paths connect clips of multiple columns together. In various embodiments, a layout 700 could include multi-chain cells (as shown by the four test routing paths) or single chain cells (where the clips are connected via a single test routing path).

The test routing paths 704 may be configured so as to not manipulate the stressed layer in a manner that would disturb the lithography risk sites (e.g., the test routing paths are connected so as not to change the violation risk of such sites). For example, the routing path would not connect across a segment that is potentially too narrow so as to make it wider.

The test routing paths may respectively include a first terminal and a second terminal that are each coupled to a contact (e.g., pad) that is accessible by test equipment after the test chip is manufactured. In various embodiments, multiple test routing paths may be connected to the same contact (e.g., via a multiplexer) or a test routing path may have a dedicated contact. The test equipment may apply a voltage to the first terminal and read a voltage on the second terminal to determine whether an open circuit exists on the test routing path, thereby determining if any of the lithography risk sites in the path resulted in an open circuit. Testing of many different routing paths and statistical analysis of the results may allow identification of layout patterns that are susceptible to manufacturing problems that will reduce yield.

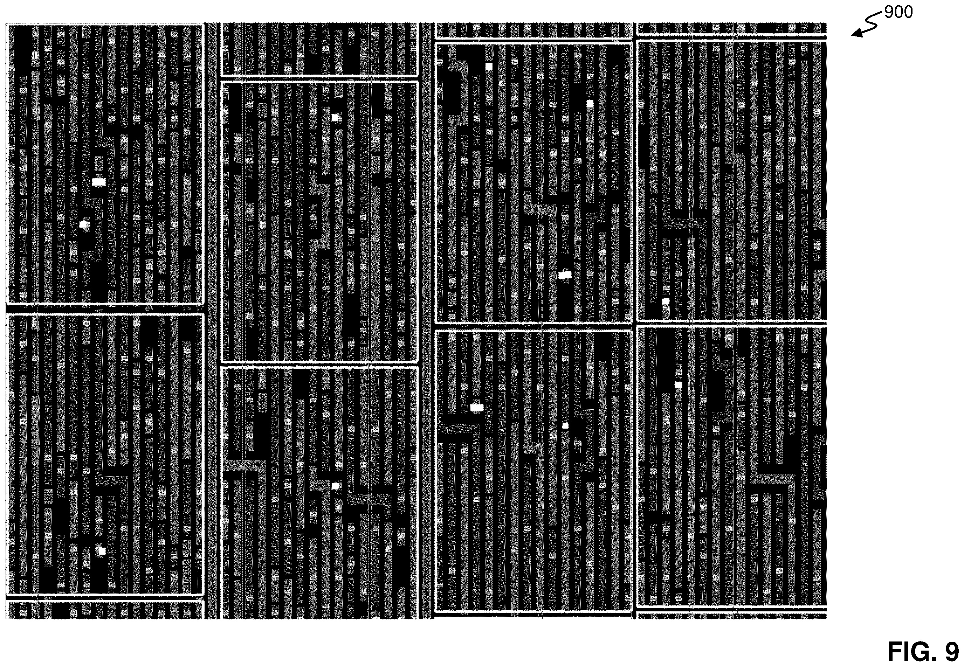

FIG. 9 illustrates a portion of another example test layout 900 comprising columns of clips with lithography risk sites. While the layout 700 of FIG. 7 illustrates a chain routing scheme, layout 900 illustrates a comb routing scheme. A comb routing scheme may stress short circuit risks by connecting many adjacent patterns of clips to opposite power nets.

In a comb routing scheme, the routing layer (not shown) may include a grating of power (e.g., Vcc) and ground (GND) lines. For example, the routing layer may include alternating power lines and ground lines. The lines on the stressed layer are connected to the appropriate type of line on the cross layer as indicated by their different shading.

In various embodiments, to generate the appropriate layout connectivity, the route generator may execute a SAT solving algorithm to assign types to each of the design patterns and attempt to maximize the number of interactions between design patterns of different types (e.g., power and ground) so as to optimize testing of short risks. As there may be multiple suitable locations for vias to the routing layer for a particular design pattern in the stressed layer, the routing of the test routing paths is significantly simplified relative to the chain routing scheme.

In various embodiments, a test device (e.g., test chip) that includes the generated test layout with the test routing path(s) may comprise two interconnect layers (e.g., the stressed layer and the routing layer) with vias in between the two layers. In some embodiments, various front end of line and back end of line manufacturing process steps may be skipped (e.g., the test chip may not comprise transistors or additional metal layers). Thus, only a portion of the standard manufacturing process that would be used to produce a chip according to the particular technology node is used, so the test wafer may be manufactured much faster than a standard wafer. As an example, for a two interconnect layer test chip, only 15-20 manufacturing steps may need to be performed relative to over 300 manufacturing steps for a standard full loop manufacturing process for a standard wafer. Usage of such test chips may enable development within a process technology at a faster pace.

In one example, the test chip may include an M0 layer as the stressed layer and an M1 layer as the routing layer. As other examples, the test chip may include an M1 layer as the stressed layer and an M2 layer as the routing layer, or the test chip may include an M2 layer as the stressed layer and an M3 layer as the routing layer, and so on.

In some embodiments, a manufactured test chip may include a first stressed layer and corresponding routing layer and a second stressed layer and corresponding second routing layer. For example, a first layout of design patterns as described by any of the embodiments herein may be placed on an M0 layer with a corresponding routing layer on the M1 layer, while a second layout of design patterns may be placed on an M2 layer with a corresponding routing layer on the M3 layer. In some embodiments, one or more additional two interconnect layer layouts (comprising a stressed layer on any suitable interconnect layer and adjacent routing layer) may be manufactured on a test chip.

In various embodiments, a stressed layer and corresponding routing layer may only include a single type of test routing path(s) (e.g., comb or chain) or may include both types of test routing paths.

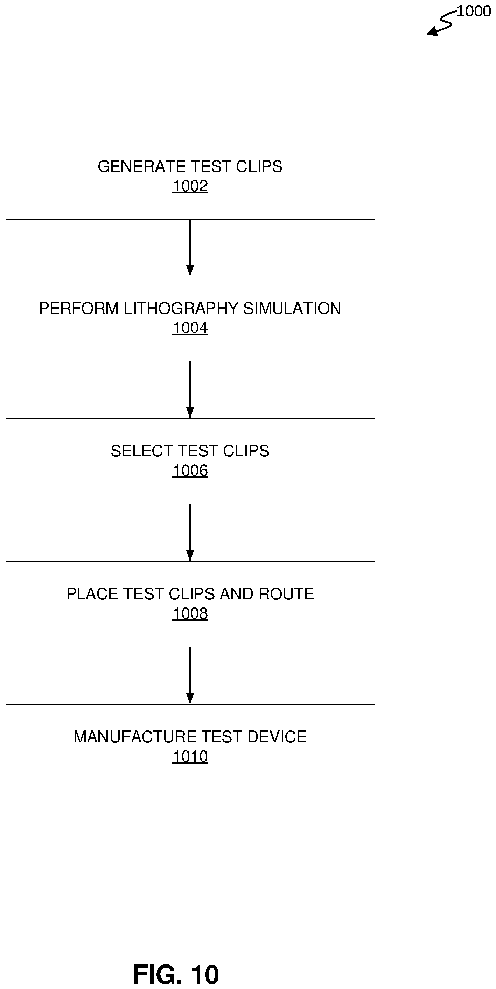

FIG. 10 illustrates a flow for generating a semiconductor test structure based on a lithographic simulation. At 1002, test clips are generated. At 1004, a lithography simulation of the generated test clips is performed. At 1006, test clips are selected based on the lithography simulation. At 1008, the selected test clips are placed into a layout and routing through lithography risk sites is performed. At 1010, a test device is manufactured according to the layout and routing.

Various embodiments also include a special-purpose method for validating repeating cells, such as static random access memory (SRAM) and radio frequency (RF) bitcells. Unlike logic layout, SRAM/RF content repeats the same base cell many times within a fixed context. As such, various embodiments may provide exhaustive validation for a target bitcell array. For example, a memory structure may be sliced by layer, and each geometry on each layer may be tested for possible open and short risks in segmented test structures. Such a method may enable provision of detailed manufacturability risk assessment for memory structure components in advance of full loop test chips required for functional memory testing.

While logic generally includes diverse patterns, an SRAM design may include patterns that are repeated many times in an array. In various embodiments, a stressed layer may include a test routing path that couples to all of the instances of the design patterns corresponding to a particular signal for the SRAM cells. For example, a first test routing path may couple to all of the bitline design patterns, a second test routing path may couple to all of the bitline bar design patterns, a third test routing path may couple to all of the wordline patterns, a fourth test routing path may couple to all of the bitline trench contacts, and so on. In some embodiments, the test routing paths may be in separate test chips (e.g., each type of design pattern corresponding to a particular portion of the SRAM may be tested in a separate test chip).

In various embodiments, because the cells are not randomly arranged, testing may be performed for every possible open risk and every possible short risk in the SRAM. Such testing may provide a differential diagnosis of which portions of the SRAM are more likely to fail in isolation.

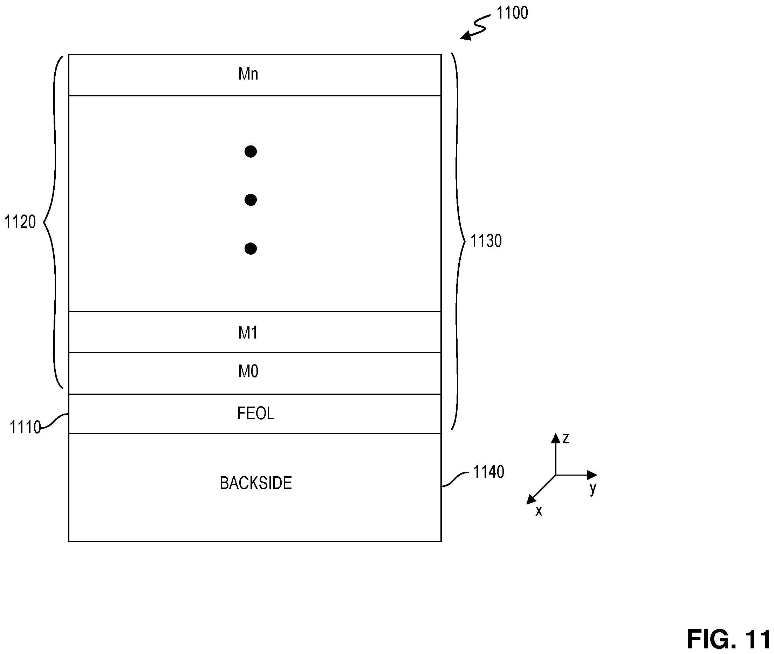

FIG. 11 provides a schematic illustration of a cross-sectional view of an example integrated circuit device (e.g., a chip) 1100. The IC device 1100 may include transistors as well as other circuit elements (e.g., resistors, diodes, capacitors, inductors, etc.). In various embodiments, any suitable structures of IC device 1100 may be present in a test device comprising a layout based on a lithographic simulation as described above.

As shown in FIG. 11, the IC device 1100 may include a front side 1130 comprising a front-end-of-line (FEOL) 1110 that includes various logic layers, circuits, and devices to drive and control a logic IC. These circuits and devices may be configured for any number of functions, such as logic or compute transistors, input/output (I/O) transistors, access or switching transistors, and/or radio frequency (RF) transistors, to name a few examples. According to some embodiments, in addition to these devices and circuits, FEOL 1110 may include, for example, one or more other layers or structures associated with the semiconductor devices and circuits. For example, the FEOL can also include a substrate and one or more dielectric layers that surround active and/or conductive portions of the devices and circuits. The FEOL may also include one or more conductive contacts that provide electrical contact to transistor elements such as gate structures, drain regions, or source regions. The FEOL may also include local interconnect (e.g., vias or lines) that connect contacts to interconnect features within a back-end-of-line (BEOL) 1120.

The front side 1130 of the IC device 1100 also includes a BEOL 1120 including various metal interconnect layers (e.g., metal 0 through metal n, where n is any suitable integer). Various metal layers of the BEOL 1120 may be used to interconnect the various inputs and outputs of the FEOL 1110.

Generally speaking, each of the metal layers of the BEOL 1120, e.g., each of the layers M0-Mn shown in FIG. 11, may include a via portion and a trench/interconnect portion. Typically, the trench portion of a metal layer is above the via portion, but, in other embodiments, a trench portion may be provided below a via portion of any given metal layer of the BEOL 1120. The trench portion of a metal layer may be configured for transferring signals and power along metal lines (also sometimes referred to as "trenches") extending in the x-y plane (e.g., in the x or y directions), while the via portion of a metal layer may be configured for transferring signals and power through metal vias extending in the z-direction, e.g., to any of the adjacent metal layers above or below. Accordingly, vias connect metal structures (e.g., metal lines or vias) from one metal layer to metal structures of an adjacent metal layer. While referred to as "metal" layers, various layers of the BEOL 1120, e.g., layers M0-Mn shown in FIG. 11, may include certain patterns of conductive metals, e.g., copper (Cu) or aluminum (Al), or metal alloys, or more generally, patterns of an electrically conductive material (e.g., including carbon based materials), formed in an insulating medium such as an interlayer dielectric (ILD). The insulating medium may include any suitable ILD materials such as silicon oxide, silicon nitride, aluminum oxide, and/or silicon oxynitride. In various embodiments, any one or more of these layers may additionally include active devices (e.g., transistors, diodes) and/or passive devices (e.g., capacitors, resistors, inductors).

The IC device 1100 may also include a backside 1140. For example, the backside 1140 may formed on the opposite side of a wafer from the front side 1130. In various embodiments, the backside 1140 may include any suitable elements to assist operation of the IC device 1100. For example, the backside 1140 may include various metal layers to deliver power to logic of the FEOL 1110.

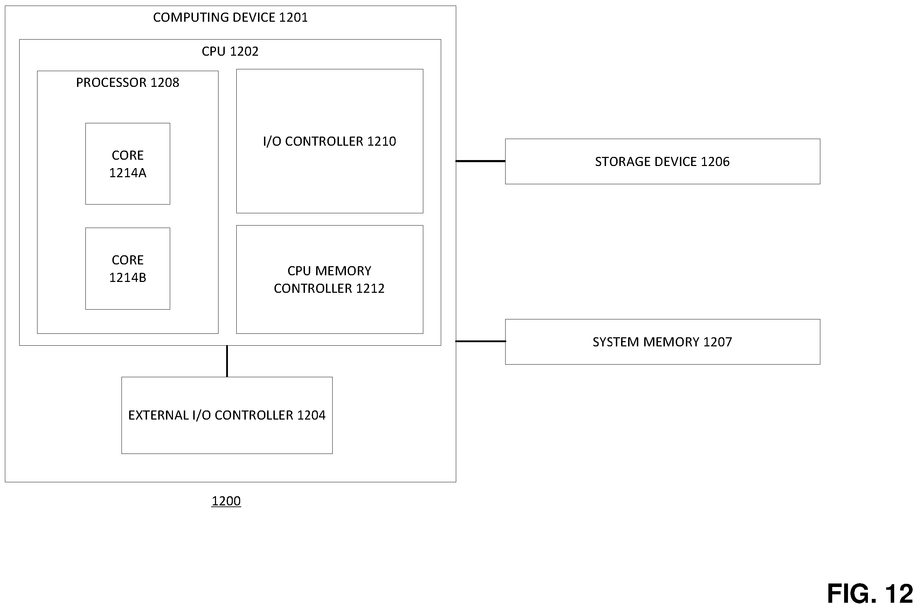

FIG. 12 illustrates a computing system 1200 in accordance with certain embodiments. Any suitable components of system 1200 may be used to perform any of the functions described above. For example, one or more systems 1200 may execute a layout generator, lithography simulation tool, constraint based checker, and/or route generator.

System 1200 includes a computing device 1201 comprising a central processing unit (CPU) 1202 coupled to an external input/output (I/O) controller 1204, storage device 1206, and system memory 1207. Although various components are illustrated, computing system 1200 may include additional other components or multiples of the components illustrated.

During operation, data may be transferred between storage device 1206 or system memory 1207 and the CPU 1202. In various embodiments, particular data operations (e.g., erase, program, and read operations) involving a storage device 1206 or system memory 1207 may be managed by an operating system or other software application executed by processor 1208.

CPU 1202 comprises a processor 1208, such as a microprocessor, an embedded processor, a digital signal processor (DSP), a network processor, a handheld processor, an application processor, a coprocessor, a system on a chip (SOC), or other device to execute code (i.e., software instructions). Processor 1208, in the depicted embodiment, includes two processing elements (cores 1214A and 1214B in the depicted embodiment), which may include asymmetric processing elements or symmetric processing elements. However, a processor may include any number of processing elements that may be symmetric or asymmetric.

In one embodiment, a processing element refers to hardware or logic to support a software thread. Examples of hardware processing elements include: a thread unit, a thread slot, a thread, a process unit, a context, a context unit, a logical processor, a hardware thread, a core, and/or any other element, which is capable of holding a state for a processor, such as an execution state or architectural state. In other words, a processing element, in one embodiment, refers to any hardware capable of being independently associated with code, such as a software thread, operating system, application, or other code. A physical processor (or processor socket) typically refers to an integrated circuit, which potentially includes any number of other processing elements, such as cores or hardware threads.

A core 1214 may refer to logic located on an integrated circuit capable of maintaining an independent architectural state, wherein each independently maintained architectural state is associated with at least some dedicated execution resources. A hardware thread may refer to any logic located on an integrated circuit capable of maintaining an independent architectural state, wherein the independently maintained architectural states share access to execution resources. As can be seen, when certain resources are shared and others are dedicated to an architectural state, the line between the nomenclature of a hardware thread and core overlaps. Yet often, a core and a hardware thread are viewed by an operating system as individual logical processors, where the operating system is able to individually schedule operations on each logical processor.

In various embodiments, the processing elements may also include one or more arithmetic logic units (ALUs), floating point units (FPUs), caches, instruction pipelines, interrupt handling hardware, registers, or other hardware to facilitate the operations of the processing elements.

I/O controller 1210 is an integrated I/O controller. I/O controller 1210 may include logic for communicating data between CPU 1202 and I/O devices, which may refer to any suitable devices capable of transferring data to and/or receiving data from an electronic system, such as CPU 1202. For example, an I/O device may comprise an audio/video (A/V) device controller such as a graphics accelerator or audio controller; a data storage device controller, such as a flash memory device, magnetic storage disk, or optical storage disk controller; a wireless transceiver; a network processor; a network interface controller; or a controller for another input devices such as a monitor, printer, mouse, keyboard, or scanner; or other suitable device. In a particular embodiment, an I/O device may comprise a storage device 1206 that may be coupled to the CPU 1202 through I/O controller 1210.

An I/O device may communicate with the I/O controller 1210 of the CPU 1202 using any suitable signaling protocol, such as peripheral component interconnect (PCI), PCI Express (PCIe), Universal Serial Bus (USB), Serial Attached SCSI (SAS), Serial ATA (SATA), Fibre Channel (FC), IEEE 802.3, IEEE 802.11, or other current or future signaling protocol. In particular embodiments, I/O controller 1210 and the underlying I/O device may communicate data and commands in accordance with a logical device interface specification such as Non-Volatile Memory Express (NVMe) (e.g., as described by one or more of the specifications available at www.nvmexpress.org/specifications/) or Advanced Host Controller Interface (AHCl) (e.g., as described by one or more AHCl specifications such as Serial ATA AHCl: Specification, Rev. 1.3.1 available at http://www.intel.com/content/www/us/en/io/serial-ata/serial-ata-ahci-spec-rev1-3-1.html). In various embodiments, I/O devices coupled to the I/O controller may be located off-chip (i.e., not on the same chip as CPU 1202) or may be integrated on the same chip as the CPU 1202.

CPU memory controller 1212 is an integrated memory controller. In various embodiments, CPU memory controller 1212 may include any one or more characteristics of I/O controller 1210. CPU memory controller may include logic to control the flow of data going to and from one or more system memories 1207. CPU memory controller 1212 may include logic operable to read from a system memory 1207, write to a system memory 1207, or to request other operations from a system memory 1207. In various embodiments, CPU memory controller 1212 may receive write requests from cores 1214 and/or I/O controller 1210 and may provide data specified in these requests to a system memory 1207 for storage therein. CPU memory controller 1212 may also read data from a system memory 1207 and provide the read data to I/O controller 1210 or a core 1214. During operation, CPU memory controller 1212 may issue commands including one or more addresses of the system memory 1207 in order to read data from or write data to memory (or to perform other operations). In some embodiments, CPU memory controller 1212 may be implemented on the same chip as CPU 1202, whereas in other embodiments, CPU memory controller 1212 may be implemented on a different chip than that of CPU 1202. I/O controller 1210 may perform similar operations with respect to one or more storage devices 1206.

The CPU 1202 may also be coupled to one or more other I/O devices through external I/O controller 1204. In a particular embodiment, external I/O controller 1204 may couple a storage device 1206 to the CPU 1202. External I/O controller 1204 may include logic to manage the flow of data between one or more CPUs 1202 and I/O devices. In particular embodiments, external I/O controller 1204 is located on a motherboard along with the CPU 1202. The external I/O controller 1204 may exchange information with components of CPU 1202 using point-to-point or other interfaces.

A system memory 1207 may store any suitable data, such as data used by processor 1208 to provide the functionality of computer system 1200. For example, data associated with programs that are executed or files accessed by cores 1214 may be stored in system memory 1207. Thus, a system memory 1207 may include a system memory that stores data and/or sequences of instructions that are executed or otherwise used by the cores 1214. In various embodiments, a system memory 1207 may store persistent data (e.g., a user's files or instruction sequences) that remains stored even after power to the system memory 1207 is removed. A system memory 1207 may be dedicated to a particular CPU 1202 or shared with other devices (e.g., one or more other processors or other devices) of computer system 1200.

In various embodiments, a system memory 1207 may include a memory comprising any number of memory arrays, a memory device controller, and other supporting logic (not shown). A memory array may include non-volatile memory and/or volatile memory. Non-volatile memory is a storage medium that does not require power to maintain the state of data stored by the medium. Nonlimiting examples of nonvolatile memory may include any or a combination of: solid state memory (such as planar or 3D NAND flash memory or NOR flash memory), 3D crosspoint memory, memory devices that use chalcogenide phase change material (e.g., chalcogenide glass), byte addressable nonvolatile memory devices, ferroelectric memory, silicon-oxide-nitride-oxide-silicon (SONOS) memory, polymer memory (e.g., ferroelectric polymer memory), ferroelectric transistor random access memory (Fe-TRAM) ovonic memory, nanowire memory, electrically erasable programmable read-only memory (EEPROM), other various types of non-volatile random access memories (RAMs), and magnetic storage memory. In some embodiments, 3D crosspoint memory may comprise a transistor-less stackable cross point architecture in which memory cells sit at the intersection of words lines and bit lines and are individually addressable and in which bit storage is based on a change in bulk resistance. Volatile memory is a storage medium that requires power to maintain the state of data stored by the medium. Examples of volatile memory may include various types of random access memory (RAM), such as dynamic random-access memory (DRAM) or static random-access memory (SRAM). One particular type of DRAM that may be used in a memory array is synchronous dynamic random-access memory (SDRAM). In some embodiments, any portion of memory 1207 that is volatile memory can comply with JEDEC standards including but not limited to Double Data Rate (DDR) standards, e.g., DDR3, 4, and 5, or Low Power DDR4 (LPDDR4) as well as emerging standards.

A storage device 1206 may store any suitable data, such as data used by processor 1208 to provide functionality of computer system 1200. For example, data associated with programs that are executed or files accessed by cores 1214A and 1214B may be stored in storage device 1206. Thus, in some embodiments, a storage device 1206 may store data and/or sequences of instructions that are executed or otherwise used by the cores 1214A and 1214B. In various embodiments, a storage device 1206 may store persistent data (e.g., a user's files or software application code) that remains stored even after power to the storage device 1206 is removed. A storage device 1206 may be dedicated to CPU 1202 or shared with other devices (e.g., another CPU or other device) of computer system 1200.

In various embodiments, storage device 1206 includes a storage device controller and one or more memory modules. In various embodiments, a memory module of storage device 1206 comprises one or more NAND flash memory arrays, one or more hard disk drives, or other suitable memory storage devices. Storage device 1206 may comprise any suitable type of memory and is not limited to a particular speed, technology, or form factor of memory in various embodiments. For example, a storage device 1206 may be a disk drive (such as a solid-state drive), a flash drive, memory integrated with a computing device (e.g., memory integrated on a circuit board of the computing device), a memory module (e.g., a dual in-line memory module) that may be inserted in a memory socket, or other type of storage device. Moreover, computer system 1200 may include multiple different types of storage devices. Storage device 1206 may include any suitable interface to communicate with CPU memory controller 1212 or I/O controller 1210 using any suitable communication protocol such as a DDR-based protocol, PCI, PCIe, USB, SAS, SATA, FC, System Management Bus (SMBus), or other suitable protocol. A storage device 1206 may also include a communication interface to communicate with CPU memory controller 1212 or I/O controller 1210 in accordance with any suitable logical device interface specification such as NVMe, AHCl, or other suitable specification. In particular embodiments, storage device 1206 may comprise multiple communication interfaces that each communicate using a separate protocol with CPU memory controller 1212 and/or I/O controller 1210.

In some embodiments, all, or some of the elements of system 1200 are resident on (or coupled to) the same circuit board (e.g., a motherboard). In various embodiments, any suitable partitioning between the elements may exist. For example, the elements depicted in CPU 1202 may be located on a single die (i.e., on-chip) or package or any of the elements of CPU 1202 may be located off-chip or off-package. Similarly, the elements depicted in storage device 1206 may be located on a single chip or on multiple chips. In various embodiments, a storage device 1206 and a computing device (e.g., CPU 1202) may be located on the same circuit board or on the same device and in other embodiments the storage device 1206 and the computing device may be located on different circuit boards or devices.

The components of system 1200 may be coupled together in any suitable manner. For example, a bus may couple any of the components together. A bus may include any known interconnect, such as a multi-drop bus, a mesh interconnect, a ring interconnect, a point-to-point interconnect, a serial interconnect, a parallel bus, a coherent (e.g. cache coherent) bus, a layered protocol architecture, a differential bus, and a Gunning transceiver logic (GTL) bus. In various embodiments, an integrated I/O subsystem includes point-to-point multiplexing logic between various components of system 1200, such as cores 1214, one or more CPU memory controllers 1212, I/O controller 1210, integrated I/O devices, direct memory access (DMA) logic (not shown), etc. In various embodiments, components of computer system 1200 may be coupled together through one or more networks comprising any number of intervening network nodes, such as routers, switches, or other computing devices. For example, a computing device (e.g., CPU 1202) and the storage device 1206 may be communicably coupled through a network.

Although not depicted, system 1200 may use a battery and/or power supply outlet connector and associated system to receive power, a display to output data provided by CPU 1202, or a network interface allowing the CPU 1202 to communicate over a network. In various embodiments, the battery, power supply outlet connector, display, and/or network interface may be communicatively coupled to CPU 1202. Other sources of power can be used such as renewable energy (e.g., solar power or motion based power).

A design may go through various stages, from creation to simulation to fabrication. Data representing a design may represent the design in a number of manners. First, as is useful in simulations, the hardware may be represented using a hardware description language (HDL) or another functional description language. Additionally, a circuit level model with logic and/or transistor gates may be produced at some stages of the design process. Furthermore, most designs, at some stage, reach a level of data representing the physical placement of various devices in the hardware model. In the case where conventional semiconductor fabrication techniques are used, the data representing the hardware model may be the data specifying the presence or absence of various features on different mask layers for masks used to produce the integrated circuit. In some implementations, such data may be stored in a database file format such as Graphic Data System II (GDS II), Open Artwork System Interchange Standard (OASIS), or similar format.

In some implementations, software based hardware models, and HDL and other functional description language objects can include register transfer language (RTL) files, among other examples. Such objects can be machine-parsable such that a design tool can accept the HDL object (or model), parse the HDL object for attributes of the described hardware, and determine a physical circuit and/or on-chip layout from the object. The output of the design tool can be used to manufacture the physical device. For instance, a design tool can determine configurations of various hardware and/or firmware elements from the HDL object, such as bus widths, registers (including sizes and types), memory blocks, physical link paths, fabric topologies, among other attributes that would be implemented in order to realize the system modeled in the HDL object. Design tools can include tools for determining the topology and fabric configurations of system on chip (SoC) and other hardware device. In some instances, the HDL object can be used as the basis for developing models and design files that can be used by manufacturing equipment to manufacture the described hardware. Indeed, an HDL object itself can be provided as an input to manufacturing system software to cause the described hardware.

In any representation of the design, the data may be stored in any form of a machine readable medium. A memory or a magnetic or optical storage such as a disc may be the machine readable medium to store information transmitted via optical or electrical wave modulated or otherwise generated to transmit such information. When an electrical carrier wave indicating or carrying the code or design is transmitted, to the extent that copying, buffering, or re-transmission of the electrical signal is performed, a new copy is made. Thus, a communication provider or a network provider may store on a tangible, machine-readable medium, at least temporarily, an article, such as information encoded into a carrier wave, embodying techniques of embodiments of the present disclosure.

In various embodiments, a medium storing a representation of the design may be provided to a manufacturing system (e.g., a semiconductor manufacturing system capable of manufacturing an integrated circuit and/or related components). The design representation may instruct the system to manufacture a device capable of performing any combination of the functions described above. For example, the design representation may instruct the system regarding which components to manufacture, how the components should be coupled together, where the components should be placed on the device, and/or regarding other suitable specifications regarding the device to be manufactured.

A module as used herein refers to circuitry and any combination of hardware, software, and/or firmware. As an example, a module includes hardware, such as a micro-controller, associated with a non-transitory medium to store code adapted to be executed by the micro-controller. Therefore, reference to a module, in one embodiment, refers to the hardware, which is specifically configured to recognize and/or execute the code to be held on a non-transitory medium. Furthermore, in another embodiment, use of a module refers to the non-transitory medium including the code, which is specifically adapted to be executed by the microcontroller to perform predetermined operations. And as can be inferred, in yet another embodiment, the term module (in this example) may refer to the combination of the microcontroller and the non-transitory medium. Often module boundaries that are illustrated as separate commonly vary and potentially overlap. For example, a first and a second module may share hardware, software, firmware, or a combination thereof, while potentially retaining some independent hardware, software, or firmware. In one embodiment, use of the term logic includes hardware, such as transistors, registers, or other hardware, such as programmable logic devices.

Logic may be used to implement any of the flows described or functionality of the various components such as CPU 1202, external I/O controller 1204, processor 1208, cores 1214A and 1214B, I/O controller 1210, CPU memory controller 1212, storage device 1206, system memory 1207, subcomponents thereof, or other entity or component described herein. "Logic" may refer to hardware, firmware, software and/or combinations of each to perform one or more functions. In various embodiments, logic may include a microprocessor or other processing element operable to execute software instructions, discrete logic such as an application specific integrated circuit (ASIC), a programmed logic device such as a field programmable gate array (FPGA), a storage device containing instructions, combinations of logic devices (e.g., as would be found on a printed circuit board), or other suitable hardware and/or software. Logic may include one or more gates or other circuit components. In some embodiments, logic may also be fully embodied as software. Software may be embodied as a software package, code, instructions, instruction sets and/or data recorded on non-transitory computer readable storage medium. Firmware may be embodied as code, instructions or instruction sets and/or data that are hard-coded (e.g., nonvolatile) in storage devices.

Use of the phrase 'to' or 'configured to,' in one embodiment, refers to arranging, putting together, manufacturing, offering to sell, importing, and/or designing an apparatus, hardware, logic, or element to perform a designated or determined task. In this example, an apparatus or element thereof that is not operating is still 'configured to' perform a designated task if it is designed, coupled, and/or interconnected to perform said designated task. As a purely illustrative example, a logic gate may provide a 0 or a 1 during operation. But a logic gate 'configured to' provide an enable signal to a clock does not include every potential logic gate that may provide a 1 or 0. Instead, the logic gate is one coupled in some manner that during operation the 1 or 0 output is to enable the clock. Note once again that use of the term 'configured to' does not require operation, but instead focus on the latent state of an apparatus, hardware, and/or element, where in the latent state the apparatus, hardware, and/or element is designed to perform a particular task when the apparatus, hardware, and/or element is operating.

Furthermore, use of the phrases 'capable of/to,' and or 'operable to,' in one embodiment, refers to some apparatus, logic, hardware, and/or element designed in such a way to enable use of the apparatus, logic, hardware, and/or element in a specified manner. Note as above that use of to, capable to, or operable to, in one embodiment, refers to the latent state of an apparatus, logic, hardware, and/or element, where the apparatus, logic, hardware, and/or element is not operating but is designed in such a manner to enable use of an apparatus in a specified manner.

A value, as used herein, includes any known representation of a number, a state, a logical state, or a binary logical state. Often, the use of logic levels, logic values, or logical values is also referred to as 1's and 0's, which simply represents binary logic states. For example, a 1 refers to a high logic level and 0 refers to a low logic level. In one embodiment, a storage cell, such as a transistor or flash cell, may be capable of holding a single logical value or multiple logical values. However, other representations of values in computer systems have been used. For example, the decimal number ten may also be represented as a binary value of 1010 and a hexadecimal letter A. Therefore, a value includes any representation of information capable of being held in a computer system.

Moreover, states may be represented by values or portions of values. As an example, a first value, such as a logical one, may represent a default or initial state, while a second value, such as a logical zero, may represent a non-default state. In addition, the terms reset and set, in one embodiment, refer to a default and an updated value or state, respectively. For example, a default value potentially includes a high logical value, i.e. reset, while an updated value potentially includes a low logical value, i.e. set. Note that any combination of values may be utilized to represent any number of states.

The embodiments of methods, hardware, software, firmware or code set forth above may be implemented via instructions or code stored on a machine-accessible, machine readable, computer accessible, or computer readable medium which are executable by a processing element. A non-transitory machine-accessible/readable medium includes any mechanism that provides (i.e., stores and/or transmits) information in a form readable by a machine, such as a computer or electronic system. For example, a non-transitory machine-accessible medium includes random-access memory (RAM), such as static RAM (SRAM) or dynamic RAM (DRAM); ROM; magnetic or optical storage medium; flash storage devices; electrical storage devices; optical storage devices; acoustical storage devices; other form of storage devices for holding information received from transitory (propagated) signals (e.g., carrier waves, infrared signals, digital signals); etc., which are to be distinguished from the non-transitory mediums that may receive information there from.

Instructions used to program logic to perform embodiments of the disclosure may be stored within a memory in the system, such as DRAM, cache, flash memory, or other storage. Furthermore, the instructions can be distributed via a network or by way of other computer readable media. Thus a machine-readable medium may include any mechanism for storing or transmitting information in a form readable by a machine (e.g., a computer), but is not limited to, floppy diskettes, optical disks, Compact Disc, Read-Only Memory (CD-ROMs), and magneto-optical disks, Read-Only Memory (ROMs), Random Access Memory (RAM), Erasable Programmable Read-Only Memory (EPROM), Electrically Erasable Programmable Read-Only Memory (EEPROM), magnetic or optical cards, flash memory, or a tangible, machine-readable storage used in the transmission of information over the Internet via electrical, optical, acoustical or other forms of propagated signals (e.g., carrier waves, infrared signals, digital signals, etc.). Accordingly, the computer-readable medium includes any type of tangible machine-readable medium suitable for storing or transmitting electronic instructions or information in a form readable by a machine (e.g., a computer).

Example 1 includes at least one machine readable storage medium having instructions stored thereon, the instructions when executed by a machine to cause the machine to access a plurality of clips including a plurality of layout design patterns and data associated with the plurality of clips, the data including identifications of lithography risk sites of simulated physical patterns corresponding to a subset of the plurality of layout design patterns; and generate a layout comprising the plurality of clips in a layer and at least one routing path that is coupled to the subset of the plurality of layout design patterns.

Example 2 includes the subject matter of Example 1, and wherein the at least one routing path includes the subset of the plurality of layout design patterns, interconnect on a second layer, and vias between the layer and the second layer.

Example 3 includes the subject matter of any of Examples 1 and 2, and wherein the plurality of clips passed a design rule check, and wherein the simulated physical patterns corresponding to the subset of the plurality of layout design patterns each violated constraint based checks.

Example 4 includes the subject matter of any of Examples 1-3, and wherein the plurality of clips comprise a second subset of the plurality of layout design patterns that correspond to simulated physical patterns that did not violate the constraint based checks.

Example 5 includes the subject matter of any of Examples 1-4, and wherein the generation of the layout is based at least in part on a density of lithography risk sites of the plurality of clips.

Example 6 includes the subject matter of any of Examples 1-5, and wherein the generation of the at least one routing path is based at least in part on a density of lithography risk sites of the plurality of clips.

Example 7 includes the subject matter of any of Examples 1-6, and wherein the generation of the layout is based at least in part on severity of lithography risk sites of the plurality of clips.

Example 8 includes the subject matter of any of Examples 1-7, and wherein the generation of the at least one routing path is based at least in part on a density of lithography risk sites of the plurality of clips.

Example 9 includes the subject matter of any of Examples 1-8, and wherein the at least one routing path comprises a chain structure to test open circuit risks.

Example 10 includes the subject matter of any of Examples 1-9, wherein the at least one routing path comprises a comb structure to test short circuit risks.

Example 11 includes a method comprising accessing, by at least one computing system, a plurality of layout blocks comprising a plurality of design patterns for a first interconnect layer and identifications of lithography risk sites of the design patterns, the lithography risk sites corresponding to violations of constraint based checks for simulated physical patterns corresponding to the plurality of design patterns; and generating, by the at least one computing system, a layout comprising the plurality of layout blocks and at least one routing path that is coupled to a subset of the plurality of design patterns having lithography risk sites.

Example 12 includes the subject matter of Example 11, and further including generating the plurality of layout blocks by inserting random cuts and jogs into layout blocks comprising parallel line patterns.

Example 13 includes the subject matter of any of Examples 11 and 12, and further including sorting the plurality of layout blocks based on severities of the lithography risk sites.

Example 14 includes the subject matter of any of Examples 11-13, and further including sorting the plurality of layout blocks based on densities of the lithography risk sites.

Example 15 includes the subject matter of any of Examples 11-14, and further including manufacturing a test chip comprising the layout on the first interconnect layer and a portion of the at least one routing path on a second interconnect layer.

Example 16 includes the subject matter of any of Examples 11-15, and wherein the at least one routing path includes at least a subset of the plurality of design patterns, interconnect on a second interconnect layer, and vias between the first interconnect layer and the second interconnect layer.

Example 17 includes the subject matter of any of Examples 11-16, and wherein the plurality of layout blocks passed a design rule check.

Example 18 includes the subject matter of any of Examples 11-17, and wherein the plurality of layout blocks comprise a second plurality of layout design patterns that correspond to simulated physical patterns that did not violate the constraint based checks.

Example 19 includes the subject matter of any of Examples 11-18, and wherein the generation of the layout is based at least in part on a density of lithography risk sites of the plurality of layout blocks.

Example 20 includes the subject matter of any of Examples 11-19, and wherein the generation of the at least one routing path is based at least in part on a density of lithography risk sites of the plurality of layout blocks.

Example 21 includes the subject matter of any of Examples 11-20, and wherein the generation of the layout is based at least in part on severity of lithography risk sites of the plurality of layout blocks.

Example 22 includes the subject matter of any of Examples 11-21, and wherein the generation of the at least one routing path is based at least in part on a density of lithography risk sites of the plurality of layout blocks.

Example 23 includes the subject matter of any of Examples 11-22, and wherein the at least one routing path comprises a chain structure to test open circuit risks.

Example 24 includes the subject matter of any of Examples 11-23, wherein the at least one routing path comprises a comb structure to test short circuit risks.

Example 25 includes a system comprising at least one storage device to store a plurality of clips including a plurality of layout design patterns and identifications of lithography risk sites within the plurality of clips, the lithography risk sites identified based on simulated physical patterns corresponding to the plurality of layout design patterns; and at least one processor to generate a layout comprising the plurality of clips and at least one routing path that is coupled to layout design patterns of the plurality of clips that have lithography risk sites.

Example 26 includes the subject matter of Example 25, and wherein the at least one processor is to perform a lithography simulation on the plurality of clips and to perform a constraint based check on the simulated physical patterns to identify the lithography risk sites.

Example 27 includes the subject matter of any of Examples 25 and 26, and wherein the generation of the layout is based at least in part on a density of lithography risk sites of the plurality of clips.

Example 28 includes the subject matter of any of Examples 25-27, and wherein the generation of the at least one routing path is based at least in part on severities of lithography risk sites of the plurality of clips.

Example 29 includes the subject matter of any of Examples 25-28 and further comprising one or more of a battery communicatively coupled to the processor, a display communicatively coupled to the processor, or a network interface communicatively coupled to the processor.

Example 30 includes the subject matter of any of Examples 25-29, and wherein the at least one processor is to generate the plurality of clips by inserting random cuts and jogs into clips comprising parallel line patterns.

Example 31 includes the subject matter of any of Examples 25-30, and wherein the at least one processor is to sort the plurality of clips based on severities of the lithography risk sites.

Example 32 includes the subject matter of any of Examples 25-31, and wherein the at least one processor is to sort the plurality of clips based on densities of the lithography risk sites.

Example 33 includes the subject matter of any of Examples 25-32, and wherein the at least one routing path includes at least a subset of the plurality of design patterns on a first interconnect layer, interconnect on a second interconnect layer, and vias between the first interconnect layer and the second interconnect layer.

Example 34 includes the subject matter of any of Examples 25-33, and wherein the plurality of clips passed a design rule check.

Example 35 includes the subject matter of any of Examples 25-34, and wherein the plurality of clips comprise a second plurality of layout design patterns that correspond to simulated physical patterns that did not violate constraint based checks.

Example 36 includes the subject matter of any of Examples 25-35, and wherein the generation of the layout is based at least in part on a density of lithography risk sites of the plurality of clips.

Example 37 includes the subject matter of any of Examples 25-36, and wherein the generation of the at least one routing path is based at least in part on a density of lithography risk sites of the plurality of clips.

Example 38 includes the subject matter of any of Examples 25-37, and wherein the generation of the layout is based at least in part on severity of lithography risk sites of the plurality of clips.

Example 39 includes the subject matter of any of Examples 25-38, and wherein the generation of the at least one routing path is based at least in part on a density of lithography risk sites of the plurality of clips.

Example 40 includes the subject matter of any of Examples 25-39, and wherein the at least one routing path comprises a chain structure to test open circuit risks.

Example 41 includes the subject matter of any of Examples 25-40, and wherein the at least one routing path comprises a comb structure to test short circuit risks.

Reference throughout this specification to "one embodiment" or "an embodiment" means that a particular feature, structure, or characteristic described in connection with the embodiment is included in at least one embodiment of the present disclosure. Thus, the appearances of the phrases "in one embodiment" or "in an embodiment" in various places throughout this specification are not necessarily all referring to the same embodiment. Furthermore, the particular features, structures, or characteristics may be combined in any suitable manner in one or more embodiments.

In the foregoing specification, a detailed description has been given with reference to specific exemplary embodiments. It will, however, be evident that various modifications and changes may be made thereto without departing from the broader spirit and scope of the disclosure as set forth in the appended claims. The specification and drawings are, accordingly, to be regarded in an illustrative sense rather than a restrictive sense. Furthermore, the foregoing use of embodiment and other exemplarily language does not necessarily refer to the same embodiment or the same example, but may refer to different and distinct embodiments, as well as potentially the same embodiment.

## Claims

1. A method comprising:
accessing a plurality of clips including a plurality of layout design patterns and data associated with the plurality of clips, the data including identifications of lithography risk sites of simulated physical patterns corresponding to a subset of the plurality of layout design patterns; and
generating a layout comprising the plurality of clips in a layer and at least one routing path that is coupled to the subset of the plurality of layout design patterns.

2. The method of claim 1, wherein the at least one routing path includes the subset of the plurality of layout design patterns, interconnect on a second layer, and vias between the layer and the second layer.

3. The method of claim 1, wherein the plurality of clips passed a design rule check, and wherein the simulated physical patterns corresponding to the subset of the plurality of layout design patterns each violated constraint based checks.

4. The method of claim 3, wherein the plurality of clips comprise a second subset of the plurality of layout design patterns that correspond to simulated physical patterns that did not violate the constraint based checks.

5. The method of claim 1, further comprising generating the layout based at least in part on a density of lithography risk sites of the plurality of clips.

6. The method of claim 1, further comprising generating the layout based at least in part on severity of lithography risk sites of the plurality of clips.

7. The method of claim 1, further comprising generating the at least one routing path based at least in part on a density of lithography risk sites of the plurality of clips.

8. The method of claim 1, wherein the at least one routing path comprises a chain structure to test open circuit risks.

9. The method of claim 1, wherein the at least one routing path comprises a comb structure to test short circuit risks.

10. The method of claim 1, wherein generating the plurality of clips comprises inserting random cuts and jogs into layout blocks comprising parallel line patterns.

11. The method of claim 1, further comprising manufacturing a test chip comprising the layout on a first interconnect layer and a portion of the at least one routing path on a second interconnect layer.

12. An apparatus comprising means for performing the method of any of claims 1-11.

13. A computer readable medium including instructions, when executed, to perform the method of any of claims 1-11.

14. An apparatus comprising logic, at least a portion of which is in hardware logic, the logic to perform the method of any of claims 1-11.
